# DEMANDE DE BREVET EUROPEEN

(11) **EP 1 302 348 A1**
(43) Date de publication de la demande: **16.04.2003**
(21) Numéro de dépôt: 02292062.3
(22) Date de dépôt: 21.08.2002
(51) Int. Cl.: B60J 3/02

(54) **Pare soleil sans rideau, sans rouleau, sans volet rabattable, pour le pare briseet toutes les vitres d'un véhicule automobile.**

(30) Priorité: 16.10.2001 FR 0113306
(71) Demandeur: Andrieu, Paul, 91550 Paray Vielle Poste (FR)
(72) Inventeur: Andrieu, Paul, 91550 Paray Vielle Poste (FR)

(57) **Abrégé**

Dispositif de pare-soleil sans rideaux, sans rouleaux, sans volet rabattable destiné à assurer aux conducteurs et passagers des véhicules automobiles une protection frontale ou latérale indépendante contre l'éblouissement du soleil figure 1.

Gaine à glissière amovible ajustable et réglable à volonté comportant un volet flexible coulissant faisant office de pare-soleil, fixé dans le plafond ou sous le plafond des véhicules, figure 1.

Positionnement en hauteur du volet sur le pare brise et sur toutes les vitres du véhicule au gré de chacun des occupants du véhicule figure 1.

## Description

La présente invention concerne un dispositif destiné à protéger les automobilistes contre l'éblouissement du soleil.

Les pare-soleils généralement montés en série sur les voitures particulières comportent un volet rabattable.

Cette technique ne permet pas un réglage du volet en hauteur et nécessite une rotation de l'ensemble pour toute protection latérale ; tandis que les passagers des places arrières ne sont pas protégés.

Le dispositif permet de pallier ces inconvénients. Selon une première caractéristique, le dispositif ne comporte pas de rideaux, ni de rouleaux, ni de volet rabattable.

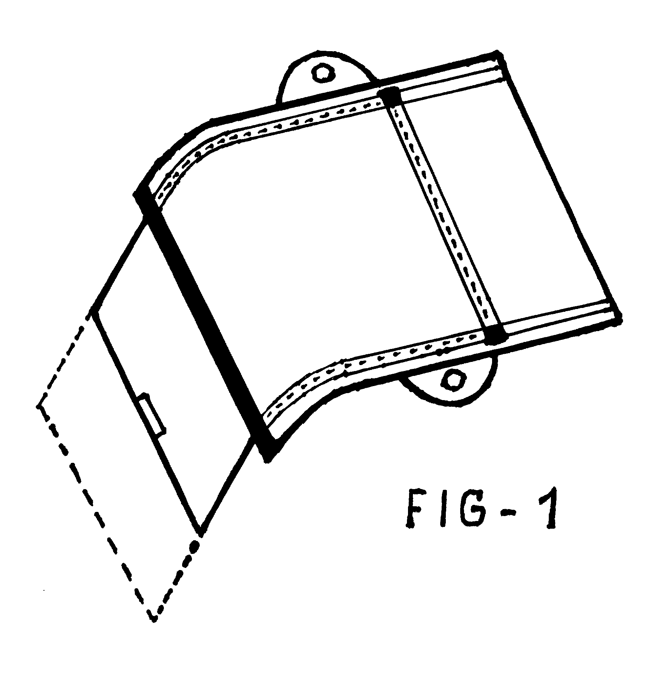

Le dispositif selon l'invention consiste en une gaine à glissière amovible, ajustable et réglable à volonté à l'intérieur de laquelle coulisse un élément flexible faisant office de pare-soleil, comportant les arrêtoirs nécessaires, figure 1.

Cette gaine à glissière amovible figure 1 étant fixée dans le plafond ou sous le plafond des voitures particulières, au gré du constructeur ou des équipementiers,' pour toute protection frontale ou latérale indépendante.

Le volet flexible coulissant, faisant office de pare-soleil pouvant être positionné à la hauteur désirée sur le pare-brise ainsi que sur toutes les vitres au gré de chacun des occupants du véhicule.

## Revendications

1. Dispositif de pare-soleil sans rideaux, sans rouleaux, sans volet rabattable destiné à assurer aux conducteurs et passagers des véhicules automobiles une protection frontale ou latérale contre l'éblouissement du soleil ; **caractérisé en ce qu'**il consiste en une gaine à glissière amovible, ajustable et réglable à volonté, à l'intérieur de laquelle coulisse un volet flexible faisant office de pare-soleil comportant les arrêtoirs nécessaires, figure 1.

2. Dispositif selon la revendication 1, **caractérisé en ce que** la gaine à glissière amovible figure 1 peut être fixée indifféremment dans le plafond ou sous le plafond du véhicule pour une protection frontale ou latérale indépendante de toutes les vitres du véhicule.

3. Dispositif selon les revendications 1 et 2, **caractérisé en ce que** le volet flexible coulissant dans la gaine peut être positionné en hauteur au gré de chacun des occupants du véhicule.
